Europäisches Patentamt

European Patent Office

Office européen des brevets

Veröffentlichungsnummer: **0 285 050**
**A2**

## EUROPÄISCHE PATENTANMELDUNG

Anmeldenummer: 88104930.8

Anmeldetag: 26.03.88

Int. Cl.⁴ **C11D 3/12** , C11D 3/37 , C11D 10/04

Priorität: 03.04.87 DE 3711267

Veröffentlichungstag der Anmeldung:
05.10.88 Patentblatt 88/40

Benannte Vertragsstaaten:
AT BE CH DE ES FR GB IT LI NL SE

Anmelder: **Henkel Kommanditgesellschaft auf Aktien**
**Postfach 1100 Henkelstrasse 67**
**D-4000 Düsseldorf-Holthausen(DE)**

Erfinder: **Upadek, Horst, Dr.**
**Im Sandforst 26**
**D-4030 Ratingen(DE)**
Erfinder: **Rivière, Michel, Dr.**
**13, rue du Colonel Fabien**
**F-51100 Reims(FR)**
Erfinder: **Andree, Hans, Dr.**
**Am Fuchshang 16**
**D-5653 Leichlingen(DE)**
Erfinder: **Jahr, Dieter**
**Löhstrasse 2**
**D-5090 Leverkusen(DE)**

Phosphatfreies, textilweichmachendes Waschmittel.

Ein phosphatfreies Waschmittel mit avivierenden Eigenschaften enthält (a) 5 bis 25 Gew.-% eines Schichtsilicates, (b) 2 bis 8 Gew.-% Natriumsalz einer (co)-polymeren Polycarbonsäure, (c) 5 bis 20 Gew.-% einer von gesättigten und/oder einfach ungesättigten $C_{12-22}$-Fettsäure abgeleiteten Natriumseife, (d) 8 bis 20 Gew.-% an synthetischen Tensiden aus der Klasse der Sulfonate, Sulfate und nichtionischen Polyglykolether-Derivate und (e) 25 bis 75 Gew.-% an sonstigen Waschmittelbestandteilen mit der Maßgabe, daß die Summen der Komponenten (a + b + c) 22,5 bis 45 Gew.-% und der Komponenten (c + d) 15 bis 35 Gew.-% betragen.

EP 0 285 050 A2

## "Phosphatfreies, textilweichmachendes Waschmittel"

Die vorliegende Erfindung betrifft ein phosphatfreies, textilweichmachende Schichtsilicate enthaltendes Waschmittel mit verbesserter Waschkraft.

Phosphatreduzierte Waschmittel, die Schichtsilicate als Textilweichmacher in Kombination mit synthetischen anionischen Tensiden und polyanionischen Komplexbildnern enthalten, sind aus DE 23 34 899-B2 bekannt. Seife sowie nichtionische Tenside sind in diesen Mitteln nicht enthalten, da sie den weichmachenden Effekt der Schichtsilicate beeinträchtigen.

H. Schott, Journal of the American Oil Chemists' Society, Vol. 45, 1968, S. 414 beschreibt, daß Waschmittel auf der Basis von Nonionics und Schichtsilicat auf Cellulosefasern (Baumwolle) nicht die erwartete Ablagerung des Schichtsilicates zum Zwecke des Weichmachens hervorrufen.

Die vorliegende Erfindung hat sich zur Aufgabe gestellt, die Waschkraft schichtsilicathaltiger Waschmittel insbesondere bei kosmetischen Anschmutzungen zu verbessern und gleichzeitig die textilweichmachenden Eigenschaften der Schichtsilicate zu steigern.

Eine weitere Aufgabe der vorliegenden Erfindung besteht darin, phosphatfreie Waschmittel durch Kombination mit Seife und mit einer herkömmlichen gemischten Tensidbasis aus synthetischem anionischem und nichtionischem Tensid herzustellen.

Gemäß der vorliegenden Erfindung wird ein verbessertes phosphatfreies, schichtsilicathaltiges Waschmittel zur Verfügung gestellt, enthaltend

a) 5 bis 25 Gew.-% eines Schichtsilicates,

b) 2 bis 8 Gew.-% Natriumsalz einer (co)-polymeren Polycarbonsäure,

c) 5 bis 20 Gew.-% einer von gesättigten und/oder einfach ungesättigten $C_{12-22}$-Fettsäure abgeleiteten Natriumseife,

d) 8 bis 20 Gew.-% an synthetischen Tensiden aus der Klasse der Sulfonate, Sulfate und nichtionischen Polyglykolether-Derivate,

e) 25 bis 75 Gew.-% an sonstigen Waschmittelbestandteilen mit der Maßgabe, daß die Summen der Komponenten (a + b + c) 22,5 bis 45 Gew.-% und der Komponenten (c + d) 15 bis 35 Gew.-% betragen.

Als "phosphatfrei" wird ein Waschmittel verstanden, das weniger als 0,1 % anorganisch gebundenen Phosphor enthält.

Geeignete Schichtsilicate, die zur Gruppe der Bentonite und Smectite zählen, sind z. B. aus US 3,966,629, US 4,062,647 (DE-23 34 899-B2) und EP-26 529-A1 bekannt.

Weiterhin werden vom Begriff der Schichtsilicate im Sinne der vorliegenden Erfindung synthetische, feinteilige, wasserunlösliche Schichtsilicate mit smectitähnlicher Kristallphase, jedoch erhöhten Gehalten an gebundenem Alkali und Silicat und einem im Vergleich zu reinen Schichtsilicaten dieses Typs deutlich verringerten Quellvermögen in wäßriger Suspension mit der Oxidsummenformel

$$MgO \cdot aM_2O \cdot bAl_2O_3 \cdot cSiO_2 \cdot nH_2O$$

eingeschlossen, worin

M für Natrium, gegebenenfalls zusammen mit Lithium mit der Maßgabe steht, daß das Molverhältnis Na/Li wenigstens 2 beträgt und worin weiterhin
a, b, c und n jeweils eine Zahl in den Bereichen

a = 0,05 bis 0,4;
b = 0 bis 0,3;
c = 1,2 bis 2,0;
n = 0,3 bis 3,0

bedeuten und dabei n für das in der Kristallphase gebundene Wasser steht, sowie
synthetische Schichtsilicate, die dadurch gekennzeichnet sind, daß die Parameter a, b und c in den folgenden Bereichen liegen:

a = 0,15 bis 0,30;
b = 0 bis 0,10;
c = 1,3 bis 1,5

wobei bevorzugterweise das Verhältnis a/b gleich oder größer 3 ist.

Weiterhin eingeschlossen im Sinne der Erfindung sind synthetische Schichtsilicate, die dadurch gekennzeichnet sind, daß sie nach Suspension in Wasser (16°dH, Raumtemperatur) ein Quellvermögen - bestimmt als Quotient des Sedimentvolumens ($V_s$) / Gesamtvolumen (V) nach vorheriger Behandlung mit überschüssiger Sodalösung, sorgfältigem Waschen und 20 Stunden nach Aufschlämmung in 9 Gewichtsteilen Wasser / ein Gewichtsteil Schichtsilicat - von $V_s$/V kleiner als 0,6, insbesondere kleiner als 0,4 besitzen, sowie synthetische Schichtsilicate, die mischkristallin ausgebildet sind und dabei strukturbestimmende saponit-und/oder hectoritähnliche Kristallphasen aufweisen, welche in unregelmäßiger Anordnung mit kristallinem Alkalipolysilicat durchsetzt sind, wobei die Mischkristallsysteme der Strukturformel

$$Na_{x+y} (Mg_{3-x}Li_x) (Si_{4-y}Al_y)O_{10}(OH)_2 .m\ Na_2Si_zO_{2z+1} . nH_2O$$

entsprechen, worin gilt

x = 0 - 0.3   bevorzugt: 0 - 0.1
y = 0 - 0.5   0 - 0.4
x + y = 0.1 - 0.5   0.2 - 0.4
z = 1 - 22   1 - 14
m = 0.1 - 0.5   0.1 - 0.3
n = 0 - 8   2 - 6

Derartige synthetische Schichtsilicate sind weiterhin dadurch gekennzeichnet, daß sie überschüssiges, nicht in die Kristallstruktur eingebundenes Alkali, insbesondere Natriumhydroxid oder Soda, enthalten und/oder in inniger Abmischung mit insbesondere wasserlöslichen Salzen, vorzugsweise Alkalisulfaten und/oder -carbonaten, vorliegen. Auf diese in der DE-A 35 26 405 beschriebenen Schichtsilicate wird hiermit ausdrücklich Bezug genommen.

Der Anteil an Schichtsilicat (Komponente a) beträgt vorzugsweise 10 bis 22 Gew.-%.

Als (co-)polymere Polycarboxylate eignen sich in 1. Linie Polyacrylate, Polymethacrylate und Copolymere der Acrylsäure mit Maleinsäure, vorzugsweise solche aus 50 % bis 90 % Acrylsäure und 50 % bis 10 % Maleinsäure. Das Molekulargewicht der Homopolymeren liegt im allgemeinen zwischen 1000 bis 100 000, das der Copolymeren zwischen 2000 und 200 000, vorzugsweise 50 000 bis 120 000, bezogen auf freie Säure. Ein besonders bevorzugtes Acrylsäure-Maleinsäure-Copolymer weist ein Molekulargewicht von 50 000 bis 100 000 auf.

Geeignete, wenn auch weniger bevorzugte Verbindungen dieser Klasse sind Copolymere der Acrylsäure oder Methacrylsäure mit Vinylethern wie Vinylmethylether, in denen der Anteil der (Meth-)Acrylsäure mindestens 50 % beträgt. Brauchbar sind ferner Polyacetalcarbonsäuren, wie sie beispielsweise in den US-Patentschriften 4 144 226 und 4 146 495 beschrieben sind und durch Polymerisation von Estern der Glykolsäure, Einführung stabiler terminaler Endgruppen und Verseifung zu den Natrium-oder Kaliumsalzen erhalten werden. Geeignet sind ferner polymere Säuren, die durch Polymerisation von Acrolein und Disproportionierung des Polymers nach Canizzaro mittels starker Alkalien erhalten werden. Sie sind im wesentlichen aus Acrylsäureeinheiten und Vinylalkoholeinheiten beziehungsweise Acroleineinheiten aufgebaut.

Der Gehalt der Mittel an (co-)polymeren Polycarbonsäuren beträgt, auf Natriumsalz bezogen (Komponente b), vorzugsweise 3 bis 7 Gew.-% und insbesondere 4 bis 6 Gew.-%. Das Gewichtsverhältnis (a : b) beträgt zweckmäßigerweise 1 : 1 bis 8 : 1, vorzugsweise 1,5 : 1 bis 5 : 1 und insbesondere 1,7 : 1 bis 4 : 1. Die Summe der Komponenten (a + b + c) beträgt 22,5 bis 45 Gew.-%, vorzugsweise 25 bis 40 Gew.-% und insbesondere 30 bis 40 Gew.-%.

Die Seifen (Komponente c) leiten sich von natürlichen oder synthetischen, gesättigten oder einfach ungesättigten Fettsäuren mit 12 bis 22 C-Atomen ab. Geeignet sind insbesondere aus natürlichen Fettsäuren, z. B. Kokos-, Palmkern-oder Talgfettsäuren abgeleitete Seifengemische sowie deren Gemische mit Fischölfettsäuren, die hydriert sein können. Bevorzugt sind solche Gemische, die zu 50 bis 100 % aus gesättigten $C_{12-22}$-Fettsäureseifen und zu 0 bis 50 % aus Ölsäureseife zusammengesetzt sind, ferner Gemische aus 20 bis 80 % Kokos-oder Talgfettsäuren und 80 bis 20 Gew.-% hydrierten Fischölfettsäuren. Vorzugsweise beträgt der Anteil der Seifen 8 bis 15 Gew.-%.

Brauchbare Tenside vom Sulfonattyp sind lineare Alkylbenzolsulfonate ($C_{9-13}$-Alkyl) und Olefinsulfonate, d.h. Gemische aus Alken-und Hydroxyalkansulfonaten sowie Disulfonaten, wie man sie beispielsweise aus $C_{12-18}$-Monoolefinen mit end-oder innenständiger Doppelbindung durch Sulfonieren mit gasförmigem Schwefeltrioxid und anschließende alkalische Hydrolyse der Sulfonierungsprodukte erhält. Geeignet sind auch Alkansulfonate, die aus $C_{12-18}$-Alkanen durch Sulfochlorierung oder Sulfoxydation und anschließende Hydrolyse bzw. Neutralisation erhältlich sind. sowie alpha-Sulfofettsäuren und deren Ester, z. B. die alphasulfonierte hydrierte Kokos-, Palmkern-oder Talgfettsäuren und deren Methyl-oder Ethylester sowie deren Gemische.

Geeignete Tenside vom Sulfattyp sind die Schwefelsäuremonoester aus primären Alkoholen natürlichen und synthetischen Ursprungs, d.h. aus Fettalkoholen, wie z.B. Kokosfettalkoholen, Talgfettalkoholen, Oleylalkohol, Lauryl-, Myristyl-, Palmityl-oder Stearylalkohol, oder den $C_{10-18}$-Oxoalkoholen sowie die Schwefelsäureester sekundärer Alkohole dieser Kettenlänge. Auch die Schwefelsäuremonoester der mit 1 bis 6 Mol Ethylenoxid ethoxylierten aliphatischen primären Alkohole bzw. ethoxylierten sekundären Alkohole bzw. Alkylphenole sind geeignet. Ferner eignen sich sulfatierte Fettsäurealkanolamide und sulfatierte Fettsäuremonoglyceride.

Sulfonatgruppen enthaltende Tenside sind bevorzugt und unter diesen wiederum die Alkylbenzolsulfonate, Alpha-Sulfofettsäureestersalze und die Alpha-Sulfofettsäureester-disalze. Die anionischen Tenside liegen üblicherweise in Form ihrer Natriumsalze vor. Ihr Anteil, bezogen auf das Mittel, beträgt insbesondere 5 bis 12 Gew.-%.

Als nichtionische Tenside sind Anlagerungsprodukte von 2 bis 20, vorzugsweise 3 bis 15 Mol Ethylenoxid an 1 Mol einer Verbindung mit im wesentlichen 10 bis 20 Kohlenstoffatomen aus der Gruppe der Alkohole und Alkylphenole verwendbar. Besonders wichtig sind die Anlagerungsprodukte von 7 bis 15 Mol Ethylenoxid an primäre Alkohole, wie z.B. an Kokos-oder Talgfettalkohole, an Oleylalkohol, an Oxoalkohole, oder an sekundäre Alkohole mit 8 bis 18, vorzugsweise 12 bis 18 C-Atomen, sowie an Mono- oder Dialkylphenole mit 6 bis 14 C-Atomen in den Alkylresten. Neben diesen wasserlöslichen Nonionics sind aber auch nicht bzw. nicht vollständig wasserlösliche Polyglykolether mit 2 bis 6 Ethylenglykoletherresten im Molekül von Interesse, insbesondere, wenn sie zusammen mit wasserlöslichen nichtionischen oder anionischen Tensiden eingesetzt werden. Der Gehalt der Mittel an nichtionischen Tensiden bzw. nichtionischen Tensidgemischen beträgt vorzugsweise 3 bis 10 Gew.-% und insbesondere 4 bis 7 Gew.-%.

Das Gewichtsverhältnis von Seife (Komponente c) zu den synthetischen Tensiden (Komponente d) beträgt vorzugsweise 1 : 2 bis 2 : 1 und insbesondere 1 : 1,5 bis 1,2 : 1. Das Gewichtsverhältnis der Komponente c) zum Sulfonattensid (Komponente d1) beträgt vorzugsweise 2 : 1 bis 1 : 1,5 und der Komponente d1) zu den nichtionischen Tensiden (Komponente d2) vorzugsweise 3 : 1 bis 1 : 1. Die Gesamtmenge an Seife und synthetischem Tensid beträgt 15 bis 35 Gew.-% und vorzugsweise 20 bis 30 Gew.-%.

Zu den sonstigen Waschmittelbestandteilen, deren Anteil 25 bis 75 Gew.-%, vorzugsweise 30 bis 60 Gew.-% beträgt, zählen Waschalkalien, Komplexierungsmittel, Vergrauungsinhibitoren (Schmutzträger), Bleichmittel, Bleichaktivatoren, optische Aufheller, Schauminhibitoren, Enzyme, Farb-und Duftstoffe sowie Neutralsalze und Wasser.

Geeignete Waschalkalien sind in erster Linie Alkalimetallsilicate, insbesondere Natriumsilicate der Zusammensetzung $Na_2O : SiO_2$ = 1 : 1 bis 1 : 3,5, vorzugsweise 1 : 2 bis 1 : 3,35. Ihr Anteil in den Mitteln kann 3 bis 18 Gew.-%, insbesondere 5 bis 15 Gew.-% betragen. Mit gewissen Einschränkungen sind auch Alkalimetallcarbonate und -borate brauchbar, jedoch soll deren Anteil im allgemeinen nicht mehr als 10 Gew.-%, insbesondere nicht mehr als 5 Gew.-% betragen, da sie in Gegenwart von hartem Wasser die Ausfällung der Härtebildner auf den Textilien begünstigen. Weiterhin können auch feinteilige, ionenaustauschende wasserhaltige Natriumalumosilicate vom Typ NaA anwesend sein, wie sie z. B. aus DE 24 12 837 bekannt sind. Prinzipiell ist ihre Mitverwendung jedoch nicht erforderlich, da die Mittel so zusammengesetzt sind, daß die natürliche Kalkhärte des Wassers nicht stört und hohe Waschleistungen erzielt werden.

Mit Vorteil können bekannte sequestrierend wirkende Verbindungen (Komplexbildner) mitverwendet werden, insbesondere wenn gleichzeitig zersetzliche Substanzen, wie Sauerstoffbleichmittel bzw. Enzyme zugegen sind. Hierzu gehören Verbindungen vom Typ der mehrwertigen Carbonsäuren, wie Citronensäure, sowie der Polyaminopolycarbonsäuren, wie Nitrilotriessigsäure (NTA) Ethylendiamintetraessigsäure (EDTA), Diethylentriaminpentaessigsäure sowie deren höhere Homologe. Geeignete phosphorhaltige organische Komplexbildner sind die wasserlöslichen Salze der Alkanpolyphosphonsäuren, Amino-und Hydroxyalkanpolyphosphonsäuren und Phosphonopolycarbonsäuren wie Methandiphosphonsäure. Dimethylaminomethan-1,1-diphosphonsäuren, Aminotrimethylentriphosphonsäure, 1-Hydroxyethan-1,1-diphosphonsäure, 1-Phosphonoethan-1,2-dicarbonsäure, 2-Phosphonobutan-1,2,4-tricarbonsäure, insbesondere jedoch Ethylendiamintetramethylen phosphonsäure und Diethylentriaminpentamethylenphosphonsäure. Die vorgenannten Komplexbildner liegen üblicherweise als saure bzw. neutrale Natriumsalze vor.

Der Anteil dieser Komplexbildner liegt im allgemeinen unter 1 Gew.-% und beträgt vorzugsweise 0,1 bis 0,8 Gew.-%, bezogen auf Natriumsalz. Bevorzugte Komplexbildner sind NTA und Ethylendiamintetramethy-

ienphosphonat, wobei im Falle des NTA dessen Anteil bis 4 Gew.-%, vorzugsweise bis 2 Gew.-% betragen kann.

Als weitere Komponente können die Wasch-und Reinigungsmittel Schmutzträger enthalten, die den von der Faser abgelösten Schmutz in der Flotte suspendiert halten und so das Vergrauen verhindern. Hierzu sind wasserlösliche Kolloide meist organischer Natur geeignet, wie beispielsweise die wasserlöslichen Salze polymerer Carbonsäuren, Leim, Gelantine, Salze von Ethercarbonsäuren oder Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich lösliche Stärkepräparate und andere als die oben genannten Stärkeprodukte verwenden, wie z.B. abgebaute Stärke, Aldehydstärken usw. Auch Polyvinylpyrrolidon ist brauchbar. Carboxymethylcellulose (Na-Salz), Methylcellulose und deren Gemische werden bevorzugt eingesetzt. Der Anteil der Verbindungen beträgt im allgemeinen 0,2 bis 2, vorzugsweise 0,5 bis 1,5 Gew.-%.

Unter den als Bleichmittel dienenden, in Wasser $H_2O_2$ liefernden Verbindungen haben das Natriumperborat-tetrahydrat ($NaBO_2 . H_2O_2 . 3 H_2O$) und das -monohydrat ($NaBO_2 . H_2O_2$) besondere Bedeutung. Diese Verbindungen können teilweise oder vollständig durch andere Aktivsäurestoffträger, insbesondere durch Peroxy hydrate, wie Peroxycarbonate ($Na_2CO_3 . 1,5 H_2O_2$), Peroxypyrophosphate, Citratperhydrate, Harnstoff-$H_2O_2$-oder Melamin-$H_2O_2$-Verbindungen sowie durch $H_2O_2$ liefernde persaure Salze oder Persäuren, wie Perbenzoate, Peroxyphthalate, Diperazelainsäure oder Diperdodekandisäure ersetzt werden.

Um beim Waschen bei Temperaturen unterhalb 80°C, insbesondere im Bereich von 40 bis 60°C, eine verbesserte Bleichwirkung zu erreichen, können Bleichaktivatoren in die Präparate eingearbeitet werden. Beispiele hierfür sind mit $H_2O_2$ organische Persäuren bildende N-Acyl-bzw. O-Acyl-Verbindungen, vorzugsweise N,N'-tetraacylierte Diamine, wie N,N,N',N'-Tetraacetyl-ethylendiamin, ferner Carbonsäureanhydride, wie Benzoesäureanhydrid und Phthalsäureanhydrid und Ester von Polyolen, wie Glucosepentaacetat.

Die Waschmittel können als optische Aufheller für Baumwolle insbesondere Derivate der Diaminostilbendisulfonsäure bzw. deren Alkalimetallsalze enthalten. Geeignet sind z.B. Salze der 4,4'-Bis(2-anilino-4-morpholino-1,3,5-triazin-6-yl-amino)-stilben-2,2'-disulfonsäure oder gleichartig aufgebaute Verbindungen, die anstelle der Morpholinogruppe eine Diethanolaminogruppe, eine Methylaminogruppe oder eine 2-Methoxyethylaminogruppe tragen. Als Aufheller für Polyamidfasern kommen solche vom Typ der 1,3-Diaryl-2-pyrazoline in Frage, beispielsweise die Verbindung 1-(p-Sulfamoylphenyl)-3-(p-chlorphenyl)-2-pyrazolin. Weiterhin können Aufheller vom Typ des substituierten 4,4'-Distyryl-diphenyls anwesend sein; z.B. die Verbindung 4,4'-Bis-(4-chlor-3-sulfostyryl)-diphenyl. Auch Gemische der vorgenannten Aufheller können verwendet werden.

Als Enzyme kommen solche aus der Klasse der Proteasen, Lipasen und Amylasen bzw. deren Gemische in Frage. Besonders geeignet sind aus Bakterienstämmen oder Pilzen, wie Bacillus subtilis, Bacillus licheniformis und Streptomyces griseus gewonnene enzymatische Wirkstoffe. Die Enzyme können an Trägerstoffen adsorbiert und/oder in Hüllsubstanzen eingebettet sein, um sie gegen vorzeitige Zersetzung zu schützen.

Geeignete Schauminhibitoren sind Organopolysiloxane und deren Gemische mit mikrofeiner, gegebenenfalls silanierter Kieselsäure, Paraffine, Wachse, Mikrokristallinwachse und deren Gemische mit silanierter Kieselsäure. Auch von $C_{12\,20}$-Fettsäuren und $C_{2\,6}$-Diaminen bzw. von $C_{12\,20}$-Alkylaminen und $C_{2\,6}$-Dicarbonsäuren abgeleitete Bis-acylamide sind brauchbar. Mit Vorteil werden auch Gemische verschiedener Schauminhibitoren verwendet, z. B. solche aus Silikonen und Paraffinen oder Wachsen bzw. aus Bis-acylamiden und Paraffinen oder Wachsen. Vorzugsweise sind die Schauminhibitoren an eine granulare, in Wasser lösliche bzw. dispergierbare Trägersubstanz gebunden.

Sofern Duftstoffe mitverwendet werden, können sie auf das körnige Mittel selbst oder auf eine Pulverkomponente aufgebracht sein. Ebenso können eine oder mehrere Pulverkomponenten angefärbt bzw. mit Pigmenten beschichtet sein, beispielsweise um Eigenfärbungen von Wirkstoffen zu überdecken bzw. dem Pulvergemisch ein farbig gesprenkeltes Aussehen zu verleihen.

Weiterhin können die Mittel Neutralsalze enthalten, insbesondere Natriumsulfat und - in geringer Menge - Natriumchlorid.

Die Herstellung der Mittel bzw. ihre Überführung in granulare Pulver bzw. Pulvergemische kann nach bekannten Mitteln erfolgen, beispielsweise durch Sprühtrocknung oder Granulation. Sofern die Verarbeitung über den Slurry-Ansatz und Heißsprühtrocknung erfolgt, werden zweckmäßigerweise die unter a) bis d) aufgeführten Komponenten gemeinsam versprüht. Mitversprüht können auch die Bestandteile der Komponente d) werden, die unter diesen Bedingungen stabil sind, wie Waschalkalien, Komplexbildner, Vergrauungsinhibitoren und Neutralsalze. Empfindliche Stoffe wie Bleichmittel, Bleichaktivatoren, Enzyme und Schauminhibitoren, werden den Sprühprodukten nachträglich zugemischt, vorzugsweise in granularer Form bzw.

in Verbindung mit einer granularen Träger-oder Hüllsubstanz. In einer anderen Ausführungsform kann auch das Schichtsilicat als Granulat dem sprühgetrockneten Pulver bzw. den sonstigen Pulverkomponenten zugemischt werden. Sofern das granulare Gemisch aus mehreren Pulverkomponenten besteht, ist es vorteilhaft, wenn die mittlere Korngröße aller Einzelkomponenten in der gleichen Größenordnung, d. h. im Bereich von 0,2 bis 1,6 mm, vorzugsweise 0,4 bis 1,2 mm liegt. Schließlich können die Pulverbestandteile auch einer gemeinsamen Granulation unterworfen werden, indem man auf das Pulvergemisch oder einen Teil desselben einen flüssigen oder durch Wasserzusatz bzw. Erwärmen verflüssigten Bestandteil (z. B. das nichtionische Tensid) unter granulierenden Bedingungen aufsprüht und - sofern nicht bereits in dem Gemisch vorhanden - die restlichen Komponenten zumischt.

Die Mittel zeichnen sich durch eine hohe Reinigungskraft aus, insbesondere auch gegenüber fettartigen, stark farbigen Anschmutzungen, die mit konventionellen Mitteln bei mittleren bis niedrigen Waschtemperaturen nur schlecht entfernbar sind, wie Lippenstift, Wimperntusche und Tönungscreme. Überraschend ist insbesondere, daß die Mittel auch bei Ansetzen mit hartem Leitungswasser nicht zur Ausbildung unerwünschter Ausfällungen und Inkrustationen auf den gewaschenen Textilien und Bauteilen der Waschmaschinen neigen, obwohl deren Bildung wegen des hohen Gehaltes an fettsauren Seifen und der Abwesenheit an "klassischen" Buildersalzen in erheblichem Maße erwartet werden mußte. Tatsächlich reicht die in bezug auf die Sequestrierung an Härtebildnern unterstöchiometrische Menge an (co-)polymeren Polycarbonsäuren aus, um in Verbindung mit der Seifen-und einer synthetischen Tensid-Komponente die Ausbildung von Inkrustationen weitgehend zu verhindern. Darüber hinaus besitzt das Mittel hervorragende textilweichmachende Eigenschaften und übertrifft in dieser Hinsicht überraschenderweise auch die bekannten Mittel gemäß DE 23 34 899-B2, welches lehrt, daß nichtionische Tenside und Seifen den Avivageeffekt beeinträchtigen.

## Beispiele

Die in folgenden Rezepturen enthaltenden Bestandteile mit Ausnahme des Perborats, des Enzyms und des Silikonentschäumers wurden durch Heißsprühen einer wäßrigen Aufschlämmung in Hohlkugelpulver (beads) mit einem Schüttgewicht von 260 bis 280 g/l überführt. Anschließend wurden Perborat sowie Enzym-und Entschäumergranulat und Duftstoff zugemischt. Die in diesen Granulaten enthaltenen Trägerstoff (im wesentlichen Neutralsalze) sind rechnerisch in dem Bestandteil "Neutralsalze, Trägermaterial" enthalten. Das Litergewicht der fertigen Aufmischungen betrug 310 bis 320 g/l.

Als Schichtsilicat wurde ein Produkt "Laundrosil" der Fa. Südchemie, München, eingesetzt. Das polymere Carboxylat bestand in den Beispielen 1, 2 und 4 aus einem Copolymeren aus 70 % Acrylsäure und 30 % Maleinsäure (Molekulargewicht ca. 70 000) und in Beispiel 3 aus Polyacrylat (Molekulargewicht 10 000), jeweils in Form der Natriumsalze. Die Seife bestand in den Beispielen 1 bis 4 aus dem Na-Salz eines 1:2-Kokos-Palmkernfettsäure-Gemisches (Kettenlänge $C_{12-18}$) und im Beispiel 5 aus den Na-Salzen eines 3:2-Gemisches gehärteter Fischölfettsäuren und Talgfettsäuren. Das Dodecylbenzolsulfonat enthielt $C_{11}$-bis $C_{13}$-Homologe und weniger als 0,5 % höhere Homologe. Das Sulfoestersalz bestand aus dem Natriumsalz eines hydrierten alpha-Sulfopalmkernfettsäure-methylesters mit einem Gehalt von ca. 20 % an alpha-Sulfosäuredinatriumsalz. EO bedeutet angelagertes Ethylenoxid. Die ethoxylierten Alkohole leiteten sich von Synthesealkoholen (Oxoalkohole) ab. CMC bedeutet Carboxymethylcellulose (Na-Salz). Als Phosphonat wurde das Hexanatriumsalz der Ethylendiamintetra-(methylenphosphorsäure) einsetzt.

| | Beispiele | | | | |
|---|---|---|---|---|---|
| | 1 | 2 | 3 | 4 | 5 |
| Schichtsilikat | 12,0 | 20,0 | 18,0 | 16,0 | 18,0 |
| Polymeres Carboxylat | 7,0 | 5,0 | 6,0 | 6,0 | 6,0 |
| Seife | 11,0 | 14,0 | 12,0 | 13,0 | 10,0 |
| Na-Dodecylbenzolsulfonat | 10,0 | 8,0 | - | 9,0 | 10,0 |
| Na-Sulfoestersalz | - | - | 10,0 | - | - |
| $C_{11-14}$-Alkohol + 5 EO | - | - | 2,0 | 2,0 | 2,5 |
| $C_{11-14}$-Alkohol + 10 EO | - | - | 3,0 | 3,0 | 2,5 |
| Nonylphenol + 6 EO | 2,5 | 2,0 | - | - | - |
| Nonylphenol + 9,5 EO | 2,5 | 2,0 | - | - | - |
| $NaO_2 : SiO_2 = 1 : 3,35$ | 12,0 | 10,0 | 9,0 | 10,0 | 12,0 |
| CMC | 1,0 | 1,0 | 1,0 | 1,0 | 1,0 |
| Phosphonat | - | 0,2 | 0,3 | 0,2 | 0,2 |
| Optischer Aufheller | 0,2 | 0,2 | 0,2 | 0,2 | 0,2 |
| Enzym | 0,4 | 0,4 | 0,4 | 0,4 | 0,5 |
| Silikonentschäumer | 0,2 | 0,2 | 0,2 | 0,2 | - |
| Na-Perborat + 4 $H_2O$ | 20,0 | 20,0 | 20,0 | 20,0 | 20,0 |
| Duftstoff | 0,2 | 0,2 | 0,2 | 0,2 | 0,2 |
| Neutralsalz, Trägerstoff, Wasser | Rest | Rest | Rest | Rest | Rest |

Bei der Anwendung zeichneten sich die Mittel durch eine hohe Waschkraft und eine sehr geringe Neigung zur Bildung von festhaftenden Ablagerungen auf den Maschinenteilen in der Waschmaschine aus. Die Textilien besaßen einen angenehmen weichen Griff.

Zum Vergleich wurde ein phosphatfreies Qualitätswaschmittel des Handels herangezogen, das im wesentlichen alpha-Sulfofettsäuresalze, Seife und Alkylpolyglykolether als Tenside sowie Metasilikat, NTA und EDTA als Gerüstsalze (Buildersalze) enthielt.

Waschbedingungen:

Trommelwaschmaschine, Einlaugen-Programm (ohne Vorwäsche), 15 Minuten bei 90 °C, 3 kg normal verschmutzte Haushaltswäsche und 100 g Testgewebe, 137 g Waschmittel, Wasserhärte 23 °dH (430 ppm CaCO), 4maliges Nachspülen mit Leitungswasser. Als Testgewebe wurde angeschmutztes Standard-Gewebe verwendet. Die angegebenen Werte sind Mittelwerte aus 3 Versuchsreihen.

|  | Beispiel | | Vergleich |
|---|---|---|---|
|  | 2 | 5 |  |

**Waschkraft** (% Remission)

| Baumwolle | 76,0 | 75,5 | 66,9 |
|---|---|---|---|
| Polyester-Baumwoll-Mischgewebe | 57,8 | 58,2 | 45,2 |
| Lippenstift-Anschmutzung auf | | | |
| Polyester-Baumwolle | 60,3 | 60,5 | 43,2 |

**Ablagerungen**
auf Maschinentrommel und

| Laugenbehälter | sehr gering | stark |
|---|---|---|

**Gewebeasche** (%)
nach 25 Waschcyclen

| Bleichnessel | 2,0 | 3,3 |
|---|---|---|
| Frottiergewebe | 2,2 | 3,1 |

| Textilweichheit | gut | hart |
|---|---|---|
| (5 Testpersonen) | (1 - 2) | (4 - 5) |

. . .

**Ansprüche**

1. Phosphatfreies Waschmittel, enthaltend
a) 5 bis 25 Gew.-% eines Schichtsilicates,
b) 2 bis 8 Gew.-% Natriumsalz einer (co)-polymeren Polycarbonsäure,
c) 5 bis 20 Gew.-% einer von gesättigten und/oder einfach ungesättigten $C_{12\ 22}$-Fettsäure abgeleiteten Natriumseife,
d) 8 bis 20 Gew.-% an synthetischen Tensiden aus der Klasse der Sulfonate, Sulfate und nichtionischen Polyglykolether-Derivate,
e) 25 bis 75 Gew.-% an sonstigen Waschmittelbestandteilen mit der Maßgabe, daß die Summen der Komponenten (a + b + c) 22,5 bis 45 Gew.-% und der Komponenten (c + d) 15 bis 35 Gew.-% betragen.
2. Mittel nach Anspruch 1, dadurch gekennzeichnet, daß der Anteil der Komponente a) 10 bis 22 Gew.-% beträgt.
3. Mittel nach den Ansprüchen 1 und 2, dadurch gekennzeichnet, daß der Anteil der Komponente b) 3 bis 7 Gew.-% beträgt.

4. Mittel nach den Ansprüchen 1 bis 3, dadurch gekennzeichnet, daß das Gewichtsverhältnis (a : b) 1 : 1 bis 6 : 1, vorzugsweise 1,5 : 1 bis 5 : 1 beträgt.

5. Mittel nach den Ansprüchen 1 bis 4, dadurch gekennzeichnet, daß die Summe der Komponenten (a + b + c) 25 bis 40 Gew.-%, vorzugsweise 30 bis 40 Gew.-% beträgt.

6. Mittel nach den Ansprüchen 1 bis 5, dadurch gekennzeichnet, daß der Anteil der Komponente (c) 8 bis 15 Gew.-% beträgt.

7. Mittel nach den Ansprüchen 1 bis 6, dadurch gekennzeichnet, daß das Gewichtsverhältnis der Komponente c) zu Komponente d) 1 : 2 bis 2 : 1 beträgt.

8. Mittel nach den Ansprüchen 1 bis 7, dadurch gekennzeichnet, daß die Komponente d) aus d1) Sulfonat und d2) nichtionischen Alkyl-, Alkenyl-oder Alkylphenolpolyglykolethern im Gewichtsverhältnis d1) : d2) = 10 : 1 bis 1 : 1 besteht.

9. Mittel nach den Ansprüchen 1 bis 8, dadurch gekennzeichnet, daß das Gewichtsverhältnis von c) zu d1) = 2 : 1 bis 1 : 1,5 beträgt.